Europäisches Patentamt

European Patent Office

Office européen des brevets

(19)

(11) Numéro de publication : **0 190 181**
**B1**

(12) **FASCICULE DE BREVET EUROPÉEN**

(45) Date de publication du fascicule du brevet :
05.04.89

(51) Int. Cl.⁴ : **G 01 D 5/34**

(21) Numéro de dépôt : 85903296.3

(22) Date de dépôt : 28.06.85

(86) Numéro de dépôt international :
PCT/FR 85/00177

(87) Numéro de publication internationale :
WO/8600697 (30.01.86 Gazette 86/03)

(54) PROCEDE ET DISPOSITIF POUR LA DETERMINATION DE LA POSITION D'UN ORGANE MOBILE AU MOYEN D'ELEMENTS A PROPRIETES OPTIQUES VARIABLES.

(30) Priorité : 02.07.84 FR 8410468

(43) Date de publication de la demande :
13.08.86 Bulletin 86/33

(45) Mention de la délivrance du brevet :
05.04.89 Bulletin 89/14

(84) Etats contractants désignés :
BE CH DE GB IT LI NL SE

(56) Documents cités :
EP–A– 0 062 192
EP–A– 0 096 152
GB–A– 2 054 135
Patents Abstracts of Japan, vol. 6, no. 59 (P-110) (937)
16 April 1982 & JP A 57515

(73) Titulaire : AEROSPATIALE SOCIETE NATIONALE INDUSTRIELLE
37, Boulevard de Montmorency
F-75781 Paris Cedex 16 (FR)

(72) Inventeur : DOMERGUE, Jean-Paul
4, rue Gabriel Péri
F-31000 Toulouse (FR)

(74) Mandataire : Bonnetat, Christian et al
Cabinet PROPI Conseils 23 rue de Léningrad
F-75008 Paris (FR)

**Description**

La présente invention concerne un procédé pour la détermination de la position d'organes mobiles au moyen d'éléments à propriétés optiques variables et un dispositif pour la mise en œuvre de ce procédé.

On sait que, pour déterminer la position d'un organe mobile, on peut lier à celui-ci au moins un élément optique dont les propriétés varient parallèlement au déplacement dudit organe mobile et déduire la position de ce dernier, le long de son déplacement, de la mesure desdites propriétés optiques variables. Cependant, les dispositifs connus de ce genre nécessitent une réalisation mécanique minutieuse et fragile pour permettre des alignements optiques précis. De plus, dans ces dispositifs connus, il est difficile de s'affranchir des variations de la source lumineuse utilisée avec lesdits éléments optiques, de sorte que les résultats sont relativement peu précis.

Par ailleurs, le brevet GB-A-2 054 135 décrit un transducteur de déplacement photo-électrique dont le principe est basé sur la coopération de plages opaques et de plages transparentes. Lorsque, dans ce transducteur, on désire rendre la lumière transmise représentative d'un déplacement, on conforme les plages opaques à la forme d'un coin.

La présente invention a pour objet de remédier aux inconvénients précités et d'indiquer un procédé et un dispositif permettant d'éviter les complications mécaniques, et d'éliminer les problèmes dus aux variations de source lumineuse, tout en conservant les avantages propres aux systèmes optiques. De plus, la présente invention permet d'éviter la conformation de plages opaques et/ou transparentes, tout en offrant de très grandes possibilités de variations représentatives du déplacement et en permettant d'obtenir ledit déplacement par une expression très simple.

A cette fin, selon l'invention, le procédé pour la détermination de la position d'un organe mobile au moyen d'éléments optiques solidaires en déplacement dudit organe mobile et présentant des propriétés optiques variables le long du déplacement dudit organe mobile, selon lequel :

— on associe audit organe mobile au moins deux tels éléments optiques ;

— on dirige sur lesdits éléments optiques un faisceau lumineux incident commun ; et

— on recueille les faisceaux lumineux respectivement transmis par lesdits éléments optiques, est caractérisé en ce que :

— on réalise lesdits éléments optiques de façon que leurs densités optiques respectives soient des fonctions connues dudit déplacement ;

— à partir des puissances lumineuses desdits faisceaux lumineux transmis par lesdits éléments optiques, on calcule une grandeur R, de la forme $R = K.x$, dans laquelle K est une constante et x la valeur dudit déplacement à partir d'une origine ; et

— de la valeur de la grandeur R, on déduit la valeur x dudit déplacement.

On n'utilise que trois systèmes à fibre optique (une à l'émission, deux à la réception) pour la liaison à l'organe de mesure du déplacement, dans le cas d'utilisation de deux éléments optiques caractéristiques de l'invention.

Dans le cas par exemple de deux éléments optiques, on sait que si la puissance du faisceau incident est égale à $P_i$, les puissances lumineuses $P_1$ et $P_2$ transmises par lesdits éléments optiques seront respectivement égales à

$$P_1 = t_1.P_i \quad \text{et} \quad P_2 = t_2.P_i \,,$$

expression dans lesquelles $t_1$ et $t_2$ sont les facteurs de transmission. Si on appelle $d_1$ et $d_2$ les densités optiques desdits éléments optiques, on sait que

$$t_1 = 10^{-d_1} \quad \text{et} \quad t_2 = 10^{-d_2} \,.$$

Conformément à l'invention, on choisit les densités optiques $d_1$ et $d_2$ de façon qu'elles varient selon une loi connue en fonction du déplacement x. Si l'on prend, à titre d'exemple, une fonction logarithmique de x, on peut écrire

$$d_1(x) = \log f(x)$$

$$d_2(x) = \log g(x) \,,$$

f(x) et g(x) étant respectivement des fonctions de x.

Il en résulte alors que :

$$P_1(x) = \frac{1}{f(x)} \cdot Pi \quad \text{et}$$

$$P_2(x) = \frac{1}{g(x)} \cdot Pi$$

Par suite, en choisissant convenablement f(x) et g(x) on peut obtenir une grandeur R de la forme R = K.x, par combinaison de $P_1$ et $P_2$.

De préférence, les fonctions f(x) et g(x) définissant les densités optiques $d_1$ et $d_2$ desdits éléments optiques sont des fonctions connues de x dans le domaine utilisé et font intervenir la course maximale totale D dudit organe mobile.

Par exemple, on peut prendre :

$$f(x) = \frac{aD}{bx + cD} \quad et \quad g(x) = \frac{aD}{bx + dD}$$

expressions dans lesquelles a, b, c et d sont des constantes.

Dans un mode de réalisation avantageux, on a choisi

$$f(x) = \frac{2D}{\frac{4}{5}x + D} \quad et \quad g(x) = \frac{2D}{\frac{4}{5}x + \frac{D}{5}}$$

On voit que si l'on calcule la quantité

$$\frac{P_1 + P_2}{P_1 - P_2} - \frac{3}{2},$$

on obtient alors la quantité R = 2 x/D.

Dans ce cas, R varie entre 0 et 2, lorsque x varie entre O et D, tandis que les rapports de puissance $P_1/Pi$ et $P_2/Pi$ varient respectivement entre 0,5 et 0,9 pour le premier et 0,1 et 0,5 pour le second, pour les mêmes variations de x.

On remarquera que la seule connaissance de R permet de déterminer la position de l'organe mobile. De plus, R est indépendant de la puissance lumineuse incidente $P_i$, ce qui permet de s'affranchir de toute fluctuation de la source émettant ladite puissance lumineuse incidente.

La précision et la sensibilité au point de mesure x dépendent uniquement de la valeur de la densité optique à ce point de mesure.

En effet, dans le cas particulier mentionné ci-dessus, on a :

$$\frac{\Delta R}{R} = \frac{\Delta x}{x} = K \cdot \frac{\Delta[d_1(x)]}{1 - k\, 10^{d_i(x)}}$$

et

$$\frac{\Delta P_i}{\Delta_x} = K' \cdot 10^{-d_i(x)} \cdot \Delta[d_i(x)]$$

i = 1,2

où

K, K', k sont des constantes

$d_i(x)$ la valeur de la densité au point de mesure x et

$p_i$ la puissance transmise correspondante.

Dans le procédé de l'invention, la sensibilité n'est limitée que par la résolution de la densité optique réalisée ; la précision obtenue dans la détermination de la position mesurée ne dépend ainsi que de la qualité de la réalisation choisie et des moyens de calcul utilisés.

A partir d'étalonnages facilement reproductibles, indépendamment des propriétés optiques choisies, on peut réaliser des mesures relatives ou absolues dans des gammes diverses d'utilisation.

Le même procédé peut facilement être mis en œuvre pour une mesure précise ou une détection tout ou rien.

Le procédé n'entraîne pas par lui-même de limite à la vitesse de l'élément mobile à mesurer.

La présente invention concerne également les divers dispositifs réalisant le procédé pour la détermination de la position d'un organe mobile au moyen d'éléments optiques solidaires en déplacement dudit organe mobile et présentant des propriétés optiques variables selon le déplacement dudit organe mobile.

En particulier, pour le cas utilisant deux éléments optiques, un tel dispositif pour la détermination de la position d'un organe mobile au moyen d'éléments optiques solidaires en déplacement dudit organe mobile et présentant des propriétés optiques variables le long du déplacemen dudit organe mobile, comportant :

— deux éléments optiques associés audit organe mobile ;

— une source lumineuse dirigeant sur lesdits éléments optiques un faisceau lumineux incident commun ; et

— des moyens pour mesurer les puissances de faisceaux lumineux respectivement transmis par lesdits éléments optiques est caractérisé en ce que :

3

— les densités optiques respectives desdits éléments optiques sont des fonctions connues dudit déplacement ; et

— on prévoit des moyens pour calculer, à partir des puissances lumineuses transmises ainsi mesurées, une grandeur R, de la forme R = K.x, dans laquelle K est une constante et x la valeur dudit déplacement à partir d'une origine, puis pour donner la valeur x = R/K.

La loi de variation de la densité optique desdits éléments optiques peut être obtenue par des moyens classiques, par exemple, par dépôt de matière sur un substrat transparent.

La source lumineuse peut comporter au moins une diode électroluminescente.

De préférence, les moyens de mesure des puissances lumineuses transmises par lesdits éléments optiques sont des diodes optoélectroniques associées à des amplificateurs, par exemple de type transimpédance. Ainsi, à la sortie desdits amplificateurs, on obtient des tensions électriques qui sont respectivement représentatives des puissances des faisceaux transmis par lesdits éléments optiques, et qui peuvent facilement être soumises à des moyens de calcul électriques.

Dans un mode de réalisation avantageux, les deux éléments optiques sont accolés l'un à l'autre et séparés par une zone opaque aux longueurs d'ondes utilisées partageant en deux parties la section du faisceau lumineux incident sur lesdits éléments optiques.

D'ailleurs, les faisceaux lumineux dont on mesure la puissance peuvent n'être que des fractions identiques des faisceaux lumineux transmis par lesdits éléments optiques.

Afin de permettre l'éloignement de la source et des moyens de mesure et de calcul dudit organe mobile, il peut être avantageux de prévoir des systèmes à fibres optiques entre lesdits éléments optiques liés à l'organe mobile d'une part, et la source lumineuse et lesdits moyens de mesure et de calcul, d'autre part.

On remarquera que les documents EP-A-0096152 et JP-A-57515 décrivent des dispositifs de mesure de déplacement comportant respectivement une diode électroluminescente et des fibres optiques.

Les figures du dessin annexé feront bien comprendre comment l'invention peut être réalisée. Sur ces figures, des références identiques désignent des éléments semblables.

La figure 1 est une vue schématique d'un mode de réalisation d'un des dispositifs selon l'invention.

Les figures 2 et 3 sont données à titre d'exemple et correspondent à une solution particulière ; elles donnent respectivement, en fonction de la longueur du déplacement, les variations de la transmission de puissance lumineuse et de la grandeur R.

Les figures 4 et 5 montrent respectivement un mode de réalisation pour l'émetteur et le récepteur du dispositif de la figure 1.

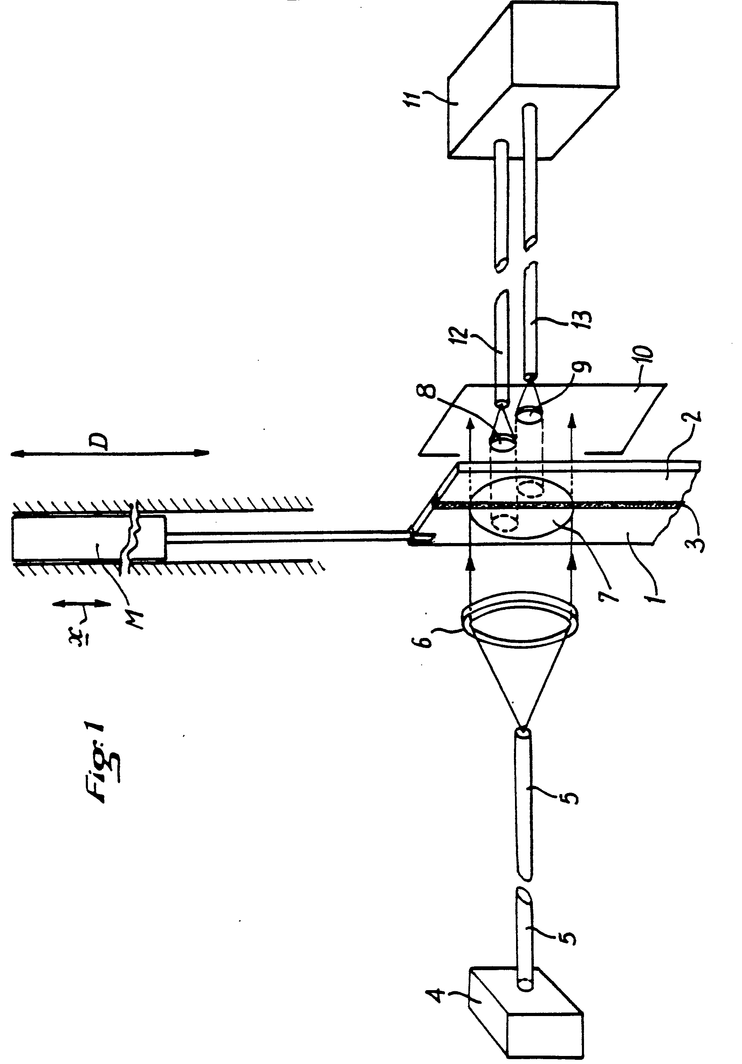

Le mode de réalisation de l'invention, montré par la figure 1, est destiné à détecter la position d'un organe mobile M, susceptible de se déplacer dans les deux sens pour effectuer un mouvement de course totale D. Sur la figure 1, on a représenté l'organe M mobile en translation rectiligne, mais il va de soi que cette sorte de déplacement n'est pas limitative de l'invention. L'organe mobile M peut se déplacer de toute manière, et notamment en rotation.

L'organe mobile M est lié en déplacement à deux éléments optiques 1 et 2 accolés, mais séparés l'un de l'autre par une zone 3 opaques aux longueurs d'ondes utilisées. Chaque élément optique est par exemple constitué par une lame parallèle sur laquelle on a effectué des dépôts métalliques lui communiquant une densité optique variant selon une loi connue parallèlement à la direction de déplacement de l'organe mobile M. Par exemple les densités $d_1$ et $d_2$ des éléments optiques 1 et 2 sont des fonctions du déplacement x et répondent respectivement aux formules :

$$d_1(x) = \log \frac{2D}{\frac{4}{5}x + D} \quad \text{et}$$

$$d_2(x) = \log \frac{2D}{\frac{4}{5}x + \frac{D}{5}}$$

Le dispositif de la figure 1 comporte une source lumineuse 4 émettant un faisceau lumineux dirigé vers les éléments 1 et 2, par un système de fibres optiques 5. Entre le système à fibres optiques 5 et les éléments optiques 1 et 2 est disposée une lentille de collimation 6, par exemple du type microlentille à fibres optiques à gradient d'indice telle que celles connues commercialement sous le nom SELFOC.

A la sortie de la lentille de collimation 6, le faisceau incident émis par la source 4 est parallèle, a la puissance lumineuse P, et forme sur les éléments 1 et 2 une tache lumineuse 7, à cheval sur la zone 3 opaque aux longueurs d'ondes utilisées.

Du côté des éléments 1 et 2 opposé à la lentille de collimation 6 sont disposées deux lentilles convergentes 8 et 9, par exemple du même type que cette lentille 6. Les lentilles 8 et 9 sont agencées dans un même plan 10 parallèles aux éléments 1 et 2, la lentille 8 étant en regard de la partie de la tache lumineuse 7 se trouvant sur l'élément 1, tandis que la lentille 9 est en regard de la partie de la tache lumineuse 7 se trouvant sur l'élément 2. Ainsi, les lentilles 8 et 9 peuvent transmettre à un récepteur 11 des faisceaux lumineux de puissance $P_1$ et $P_2$ respectivement, par l'intermédiaire de système à fibres optiques 12 et 13. Chacun des faisceaux transmis au récepteur 11 est donc une partie du faisceau

4

incident, traversant les éléments optiques 1 et 2, respectivement. Le faisceau incident se partage donc en deux faisceaux traversants différents selon la valeur de densité traversée. Par mesure des deux faisceaux traversants, on peut définir la position de l'élément mobile M, lié aux éléments optiques 1 et 2.

En effet, si les éléments 1 et 2 ont été fabriqués pour présenter, en fonction de x, respectivement les densités données ci-dessus, les puissances $P_1$ et $P_2$ des faisceaux traversant respectivement les lentilles 8 et 9 sont données par

$$P_1(x) = \frac{P_i}{2D} \left( \frac{4}{5} x + D \right) \quad \text{et}$$

$$P_2(x) = \frac{P_i}{2D} \left( \frac{4}{5} x + \frac{D}{5} \right)$$

de sorte que $R(x) = \dfrac{P_1 + P_2}{P_1 - P_2} - \dfrac{3}{2} = \dfrac{2x}{D}$

Le récepteur 11 calcule donc R et, connaissant D, fournit $x = (R.D)/2$.

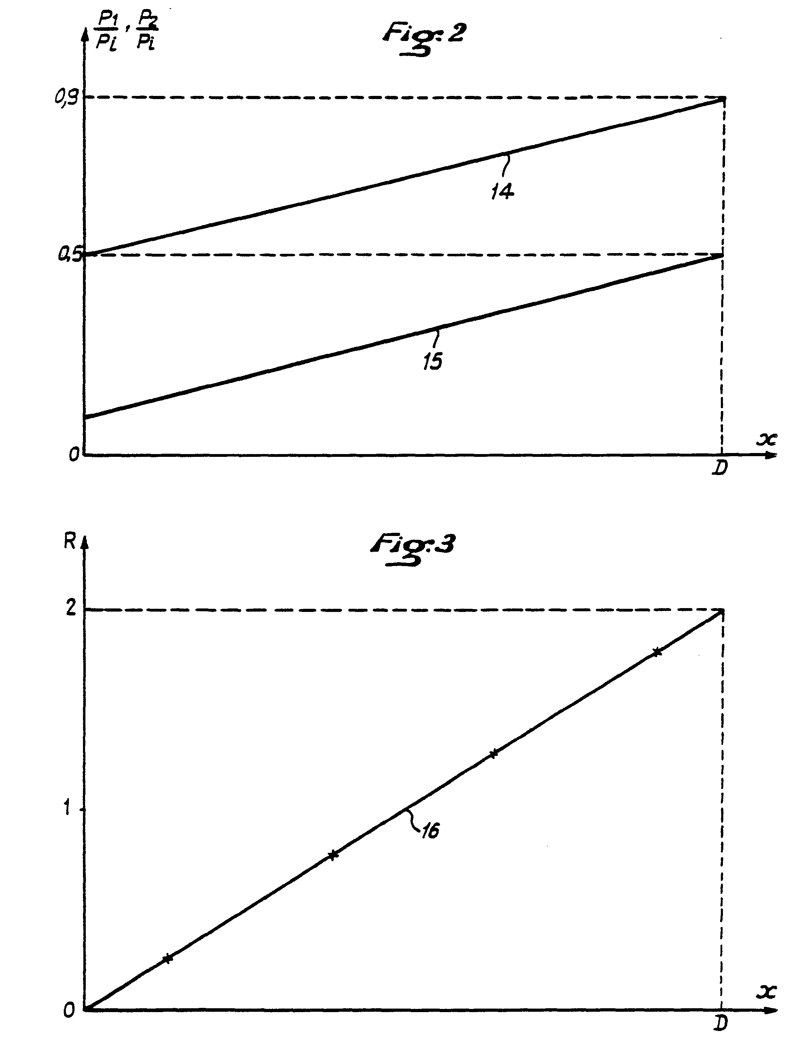

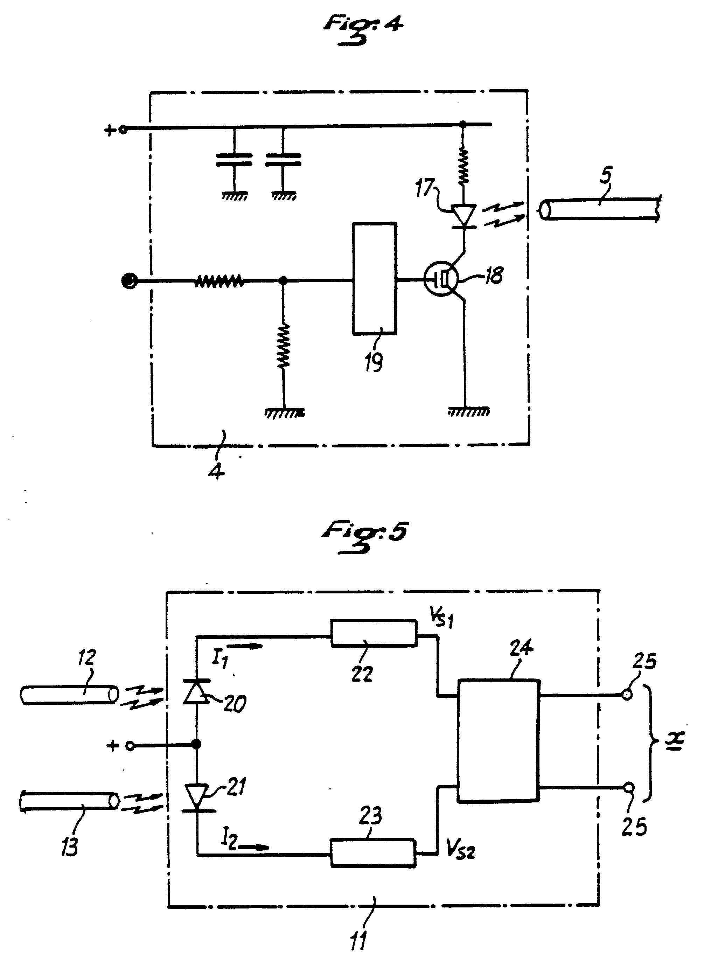

Sur la figure 2, on a représenté par les segments de droite 14 et 15 respectivement, les variations des rapports $P_1/P_i$ et $P_2/P_i$ lorsque x varie de O à D. La figure 3 illustre, par le segment de droite 16, la variation de la quantité R, pour la même variation de x.

Comme le montre la figure 4, la source lumineuse 4 peut, de façon connue, comporter une diode électroluminescente 17 montée dans le circuit émetteur-collecteur d'un transistor 18, commandé par sa base par l'intermédiaire d'un dispositif de régulation 19. Ainsi, la diode électroluminescente 17 peut émettre un faisceau lumineux qui, transmis par le système à fibres optiques 5 et collimaté par la lentille 6 donne naissance au faisceau incident de puissance Pi.

Le mode de réalisation du récepteur 11, montré par la figure 5 comporte deux diodes appairées 20 et 21 de type PIN, l'une recevant du système à fibres optiques 12 le faisceau de puissance $P_1$ et l'autre du système à fibres optiques 13 le faisceau de puissance $P_2$. Chacune desdites diodes 20 et 21 délivre un courant $I_1$ ou $I_2$ respectivement, proportionnel à la puissance lumineuse $P_1$ ou $P_2$ qu'elle reçoit. Ainsi, l'intensité des courants $I_1$ et $I_2$ est proportionnelle à la valeur x du déplacement de l'organe mobile M.

Les courants $I_1$ et $I_2$ sont appliqués à des amplificateurs par exemple de type à transimpédance, 22 et 23 respectivement, qui délivrent à leurs sorties des tensions $V_{s1}$ et $V_{s2}$ proportionnelles auxdits courants $I_1$ et $I_2$, c'est-à-dire proportionnelles à $P_1$ et $P_2$ respectivement et à x.

Les tensions $V_{s1}$ et $V_{s2}$ sont transmises à un dispositif de calcul 24, qui fournit entre ses bornes de sortie 25, la valeur x, après avoir calculé R.

L'exemple décrit pour le dispositif correspond à un cas particulier de l'invention. Il n'est pas limitatif de sa portée. En effet, le procédé peut aussi s'appliquer à un plus grand nombre d'éléments optiques et/ou ayant des lois optiques différentes, que ces lois soient continues ou comportent des éléments discrets pouvant donner directement des transcriptions digitales.

La réalisation de ce dispositif ne nécessite pas une précision particulière comme dans le cas d'autres systèmes faisant appel, par exemple, soit à des propriétés magnétiques soit à des découpages mécaniques précis.

Les étanchéités et protections nécessaires à des environnements difficiles peuvent être réalisés par des moyens classiques existants.

On peut ainsi aboutir à des réalisations simples, peu coûteuses et facilement reproductibles.

## Revendications

1. Procédé pour la détermination de la position d'un organe mobile (M) au moyen d'éléments optiques solidaires en déplacement dudit organe mobile et présentant des propriétés optiques variables le long du déplacement dudit organe mobile, selon lequel :
   — on associe audit organe mobile (M) au moins deux tels éléments optiques (1 et 2) ;
   — on dirige sur lesdits éléments optiques (1 et 2) un faisceau lumineux incident commun ;
   — on recueille les faisceaux lumineux respectivement transmis par lesdits éléments optiques,
caractérisé en ce que :
   — on réalise lesdits éléments optiques (1 et 2) de façon que leurs densités optiques respectives soient des fonctions connues dudit déplacement ;
   — à partir des puissances lumineuses desdits faisceaux lumineux transmis par lesdits éléments optiques, on calcule une grandeur R, de la forme R = K.x, dans laquelle K est une constante et x la valeur dudit déplacement à partir d'une origine ; et
   — de la valeur de la grandeur R, on déduit la valeur x dudit déplacement.

2. Procédé selon la revendication 1, caractérisé en ce que les densités optiques respectives $d_1$ et $d_2$ des deux éléments optiques (1 et 2) sont des fonctions connues du déplacement x et font intervenir la course maximale D dudit organe mobile (M).

3. Procédé selon la revendication 2, caractérisé en ce que l'on choisit

$$d_1(x) = \log \frac{2D}{\frac{4}{5}x + D} \qquad \text{et}$$

$$d_2(x) = \log \frac{2D}{\frac{4}{5}x + \frac{D}{5}}$$

et en ce que l'on calcule la quantité

$$R = \frac{P_1 + P_2}{P_1 - P_2} - \frac{3}{2}$$

pour obtenir x = (R.D)/2.

4. Dispositif pour la détermination de la position d'un organe mobile (M) au moyen d'éléments optiques solidaires en déplacement dudit organe mobile et présentant des propriétés optiques variables le long du déplacement dudit organe mobile, comportant :
— deux éléments optiques (1 et 2) associés audit organe mobile (M) ;
— une source lumineuse (4) dirigeant sur lesdits éléments optiques (1 et 2) un faisceau lumineux incident commun ; et
— des moyens (20, 21) pour mesurer les puissances de faisceaux lumineux respectivement transmis par lesdits éléments optiques (1 et 2),
caractérisé en ce que :
— les densités optiques respectives desdits éléments optiques (1 et 2) sont des fonctions connues dudit déplacement ; et
— on prévoit des moyens (24) pour calculer, à partir des puissances lumineuses ainsi mesurées, une grandeur R, de la forme R = K.x, dans laquelle K est une constante et x la valeur dudit déplacement à partir d'une origine, puis pour donner la valeur x = R/K.

5. Dispositif selon la revendication 4, caractérisé en ce que lesdits éléments optiques (1 et 2) sont du type dans lequel la densité optique est obtenue par dépôt de matière sur un substrat transparent.

6. Dispositif selon l'une quelconque des revendications 4 ou 5, caractérisé en ce que ladite source lumineuse (4) comporte au moins une diode électroluminescente (17).

7. Dispositif selon l'une des revendications 4 à 6, caractérisé en ce que lesdits moyens de mesure des puissances lumineuses transmises par lesdits éléments optiques (1 et 2) sont des diodes optoélectroniques (20, 21) associées à des amplificateurs par exemple de type à transimpédance (22, 23).

8. Dispositif selon l'une quelconque des revendications 4 à 7, caractérisé en ce que les deux éléments optiques (1 et 2) sont accolés l'un à l'autre mais séparés par une zone (3) opaque aux longueurs d'onde utilisées et en ce que la section du faisceau lumineux incident sur lesdits éléments optiques est partagée en deux par ladite zone opaque.

9. Dispositif selon l'une quelconque des revendications 4 à 8, caractérisé en ce que les faisceaux lumineux dont on mesure la puissance ne sont que deux fractions identiques des faisceaux lumineux transmis par lesdits éléments optiques (1, 2).

10. Dispositif selon l'une quelconque des revendications 4 à 9, caractérisé en ce que des systèmes à fibres optiques (5, 12, 13) sont prévus entre lesdits éléments optiques (1 et 2) d'une part, et la source lumineuse (4) et les moyens de mesure et de calcul (20, 21, 24) d'autre part.

## Claims

1. Process for determining the position of a mobile member (M) by means of optical elements fast in displacement with said mobile member and presenting variable optical properties along the displacement of said mobile member, wherein :
— there are associated with said mobile member (M) at least two optical elements (1 and 2) ;
— a common incident light beam is directed onto said optical elements (1 and 2) ;
— the power of light beams respectively transmitted by said optical elements is collected, characterized in that :
— said optical elements (1 and 2) are designed so that their respective optical densities are known functions of said displacement ;
— from the light powers of said light beams transmitted by said optical elements, a magnitude R, of the form R = K.x, is calculated, in which K is a constant and x the value of said displacement from an origin ; and
— the value x of said displacement is deduced from the value of magnitude R.

2. Process according to Claim 1, characterized in that the respective optical densities $d_1$ and $d_2$ of

the two optical elements (1 and 2) are known functions of the displacement x and cause the maximum stroke D of said mobile member (M) to intervene.

3. Process according to Claim 2, characterized in that

$$d_1(x) = \log \frac{2D}{\frac{4}{5}x + D} \quad \text{and}$$

$$d_2(x) = \log \frac{2D}{\frac{4}{5}x + \frac{D}{5}}$$

are selected and the quantity

$$R = \frac{P_1 + P_2}{P_1 - P_2} - \frac{3}{2}$$

is calculated, in order to obtain x = (R.D)/2.

4. A device for determining the position of a mobile member (M) by means of optical elements fast in displacement with said mobile member and presenting optical properties which vary along the displacement of said mobile member, comprising :
— two optical elements (1 and 2) associated with said mobile member (M) ;
— a light source (4) directing a common incident light beam onto said optical elements (1 and 2) ; and
— means (20, 21) for measuring the powers of the light beams respectively transmitted by said optical elements (1 and 2) ;
characterized in that :
— the respective optical densities of said optical elements (1 and 2) are known functions of said displacement ; and
— means (24) are provided for calculating, from the transmitted light powers measured in this way, a magnitude R, of the form R = K.x, in which K is a constant and x the value of said displacement, from an origin, then for giving the value x = R/K.

5. Device according to Claim 4, characterized in that said optical elements (1 and 2) are of the type in which the optical density is obtained by deposit of matter on a transparent substrate.

6. Device according to any one of Claims 4 or 5, characterized in that said light source (4) comprises at least one electro-luminescent diode (17).

7. Device according to one of Claims 4 to 6, characterized in that said means for measuring the light powers transmitted by said optical elements (1 and 2) are opto-electronic diodes (20, 21) associated with amplifiers for example of transimpedance type (22, 23).

8. Device according to any one of Claims 4 to 7, characterized in that the two optical elements (1 and 2) are joined to each other, but separated by a zone (3) opaque to the wave lengths used and in that the section of the incident light beam on said optical elements is divided into two by said opaque zone.

9. Device according to any one of Claims 4 to 8, characterized in that the light beams of which the power is measured are only two identical fractions of the light beams transmitted by said optical elements (1, 2).

10. Device according to any one of Claims 4 to 9, characterized in that optical fiber systems (5, 12, 13) are provided between said optical elements (1 and 2) on the one hand and the light source (4) and the measuring and calculating means (20, 21, 24) on the other hand.

**Patentansprüche**

1. Verfahren zur Stellungsbestimmung eines beweglichen Organs (M) mittels optischer Elemente, die ihre Stellung in fester Relation zu derjenigen des beweglichen Organs verändern und dem Verstellweg des beweglichen Organs entlang sich ändernde optische Eigenschaften aufweisen, wobei :
— man dem beweglichen Organ (M) wenigstens zwei solche optischen Elemente (1 und 2) zuordnet ;
— man auf die optischen Elemente (1 und 2) ein gemeinsames einfallendes Lichtbündel richtet ;
— man die von den beiden optischen Elementen übertragenen Lichtbündel jeweils wieder sammelt, dadurch gekennzeichnet, daß :
— man die optischen Elemente (1 und 2) in der Weise verwirklicht, daß ihre optischen Dichten bekannte Funktionen des Verstellweges bilden ;
— man auf der Grundlage der Lichtleistungen der durch die optischen Elemente übertragenen Lichtbündel eine Größe R berechnet, welche die Form R = K.x hat, wobei K eine Konstante und x der Wert des Verstellweges ausgehend von der Anfangsstellung ist ; und
— man vom Wert der Größe R den Wert x des Verstellweges ableitet.

7

2. Verfahren nach Anspruch 1, dadurch gekennzeichnet, daß die optischen Dichten $d_1$ bzw. $d_2$ der beiden optischen Elemente (1 und 2) bekannte Funktionen des Verstellweges x sind mit dem maximalen Verstellweg D des beweglichen Organs (M) als Parameter.

3. Verfahren nach Anspruch 2, dadurch gekennzeichnet, daß man wählt

$$d_1(x) = \log \frac{2\,D}{\frac{4}{5}\,x + D} \qquad \text{und}$$

$$d_2(x) = \log \frac{2\,D}{\frac{4}{5}\,x + \frac{D}{5}}$$

und daß man den Wert

$$R = \frac{P_1 + P_2}{P_1 - P_2} - \frac{3}{2}$$

berechnet, um $x = (R.D)/2$ erhalten.

4. Vorrichtung zur Stellungsbestimmung eines beweglichen Organs (M) mittels optischer Elemente, die ihre Stellung in fester Relation zu derjenigen des beweglichen Organs verändern und dem Verstellweg des beweglichen Organs entlang sich ändernde optische Eigenschaften aufweisen, mit :
— zwei dem beweglichen Organ (M) zugeordneten optischen Elementen (1 und 2) ;
— einer Lichtquelle (4), die ein gemeinsames einfallendes Lichtbündel auf die optischen Elemente (1 und 2) richtet ; und
— Mitteln (20, 21) zur Messung der Leistungen der durch die optischen Elemente (1 und 2) jeweils übertragenen Lichtbündel,
dadurch gekennzeichnet, daß :
— die optischen Dichten der optischen Elemente (1 und 2) bekannte Funktionen des Verstellweges sind ; und
— Mittel (24) vorgesehen sind, um ausgehend von den auf diese Weise gemessenen Lichtleistungen eine Größe R der Form R = K.x zu berechnen, wobei K eine Konstante und x der Wert des Verstellweges ausgehend von der Anfangsstellung ist, und um daraus den Wert x = R/K anzugeben.

5. Vorrichtung nach Anspruch 4, dadurch gekennzeichnet, daß bei den optischen Elementen (1 und 2) die optische Dichte durch Ablagerungen von Material auf einem durchsichtigen Substrat erreicht wird.

6. Vorrichtung nach einem der Ansprüche 4 oder 5, dadurch gekennzeichnet, daß die Lichtquelle (4) wenigstens eine Leuchtdiode (17) aufweist.

7. Vorrichtung nach einem der Ansprüche 4 bis 6, dadurch gekennzeichnet, daß die Mittel zur Messung der durch die optischen Elemente (1 und 2) übertragenen Lichtleistungen mit Verstärkern, beispielsweise Transimpedanzverstärkern (22, 23) versehene optoelektronische Dioden (20, 21) sind.

8. Vorrichtung nach einem der Ansprüche 4 bis 7, dadurch gekennzeichnet, daß die beiden optischen Elemente (1 und 2) fest miteinander verbunden, aber durch eine für die verwendete Wellenlänge undurchlässige Zone (3) voneinander getrennt sind, und daß die auf die optischen Elemente fallende Sektion des einfallenden Lichtbündels durch die undurchlässige Zone zweigeteilt ist.

9. Vorrichtung nach einem der Ansprüche 4 bis 8, dadurch gekennzeichnet, daß die Lichtbündel, deren Leistung gemessen wird, nur zwei identische Fraktionen der durch die optischen Elemente (1, 2) übertragenen Lichtbündel sind.

10. Vorrichtung nach einem der Ansprüche 4 bis 9, dadurch gekennzeichnet, daß zwischen den optischen Elementen (1 und 2) einerseits und der Lichtquelle (4) und den Meß- und Rechenmitteln (20, 21, 24) andererseits optische Fasersysteme (5, 12, 13) vorgesehen sind.

*Fig. 1*

EP 0 190 181 B1

Fig. 2

Fig. 3

## Fig: 4

## Fig: 5